# EUROPEAN PATENT APPLICATION

(11) **EP 4 848 744 A1**
(43) Date of publication of application: **02.12.2026**
(21) Application number: 26181683.9
(22) Date of filing: 28.05.2026
(51) Int. Cl.: H04N 23/88, H04N 1/60, H04N 9/73

(54) **METHOD, APPARATUS, DEVICE AND STORAGE MEDIUM FOR CORRECTING IMAGE COLOR**

(30) Priority: 30.05.2025 CN 202510724304
(71) Applicant: Horizon Journey (Hangzhou) Technology Co., Ltd., Hangzhou, Zhejiang 310000 (CN)
(72) Inventor: SHEN, Youjin, Zhejiang, 310000 (CN); WANG, Jingyao, Zhejiang, 310000 (CN); LOU, Zengyuan, Zhejiang, 310000 (CN); YI, Fulong, Zhejiang, 310000 (CN); CHENG, Shaohui, Zhejiang, 310000 (CN); SHI, Lianxu, Zhejiang, 310000 (CN); XIN, Jiahui, Zhejiang, 310000 (CN)
(74) Representative: Müller-Boré & Partner Patentanwälte PartG mbB

(57) **Abstract**

A method, an apparatus (900), a device (120) and a storage medium for correcting an image color are disclosed. The method comprises: determining (202, 203) a first color correction matrix corresponding to the first driving environment, and a second color correction matrix corresponding to the second driving environment; determining (204), based on the second color correction matrix and a first intermediate color correction matrix corresponding to a previous time point of the plurality of time points, an adjustment speed; determining (205), based on the adjustment speed, the first intermediate color correction matrix and the second color correction matrix, a second intermediate color correction matrix corresponding to a current time point; and performing (206), based on the second intermediate color correction matrix, color correction on the second image frame captured at the current time point.

## Description

### FIELD

The present disclosure relates to the technical field of image processing, and more specifically, to a method, an apparatus, a device and a storage medium for correcting an image color.

### BACKGROUND

In order to exactly restore the colors of the driving environment in various captured images, and the color saturations, a color correction matrix (CCM) can be used to adaptively correct the captured images. By correcting the images captured in various driving environments using the CCM, it can ensure that the corrected images meet intelligent driving requirements. Therefore, it is important for the intelligent driving systems to reproduce the colors of images captured in various intelligent driving environments. For example, in the driving environments such as tunnels, daytime, nights, rainy days, and the like, it is required to perform color restoration on images captured by cameras, using the CCM, to ensure driving safety of vehicles in various driving environments.

### SUMMARY

In a first aspect of the present disclosure, there is provided an image color correction method, comprising: obtaining a first image frame captured by a vehicle in a first driving environment, and second image frames captured respectively, by the vehicle, at a plurality of time points in a second driving environment; determining, based on the first image frame, a first color correction matrix corresponding to the first driving environment; determining, based on a second image frame, a second color correction matrix corresponding to the second driving environment; determining, based on a first intermediate color correction matrix corresponding to a previous time point of the plurality of time points and the second color correction matrix, a corresponding adjustment speed for adjusting the first intermediate color correction matrix to the second color correction matrix, wherein the first intermediate color correction matrix at least comprises the first color correction matrix, and the first color correction matrix is used for performing color correction for a second image frame captured at the previous time point; determining, based on the adjustment speed, the first intermediate color correction matrix and the second color correction matrix, a second intermediate color correction matrix corresponding to a current time point of the plurality of time points; and performing, based on the second intermediate color correction matrix, color correction on the second image frame captured at the current time point.

In a second aspect of the present disclosure, there is provided an image color correction apparatus, comprising: an image frame obtaining module for obtaining a first image frame captured by a vehicle in a first driving environment, and second image frames captured respectively, by the vehicle, at a plurality of time points in a second driving environment; a first matrix obtaining module for determining, based on the first image frame, a first color correction matrix corresponding to the first driving environment; a second matrix obtaining module for determining, based on a second image frame, a second color correction matrix corresponding to the second driving environment; an adjustment speed determining module for determining, based on a first intermediate color correction matrix corresponding to a previous time point of the plurality of time points and the second color correction matrix, a corresponding adjustment speed for adjusting the first intermediate color correction matrix to the second color correction matrix, wherein the first intermediate color correction matrix at least comprises the first color correction matrix, and the first color correction matrix is used for performing color correction for a second image frame captured at the previous time point; an intermediate matrix obtaining module for determining, based on the adjustment speed, the first intermediate color correction matrix and the second color correction matrix, a second intermediate color correction matrix corresponding to a current time point of the plurality of time points, wherein the second intermediate color correction matrix is used for performing color correction on the second image frame captured at the current time point; and an image correction module for performing, based on the second intermediate color correction matrix, color correction on the second image frame captured at the current time point.

In a third aspect of the present disclosure, there is provided a computer-readable storage medium, wherein the storage medium stores a computer program, and the computer program is executed by a processor to perform the image color correction method as provided in the first aspect as described above.

In a fourth aspect of the present disclosure, there is provided an electronic device, comprising: a processor; and a memory for storing executable instructions by the processor; wherein the processor is used for reading the executable instructions from the memory, and executing the instructions to implement the image color correction method as provided in the first aspect as described above.

In a fifth aspect of the present disclosure, there is provided a computer program product, wherein instructions in the computer program product, when executed by a processor, execute the image color correction method as provided in the first aspect as described above.

### BRIEF DESCRIPTION OF THE DRAWINGS

Fig. 1 illustrates a schematic diagram of an application scenario provided by an example embodiment of the present disclosure.
Fig. 2 illustrates a schematic flowchart of an image color correction method provided by an example embodiment of the present disclosure.
Fig. 3 illustrates a schematic flowchart of an image color correction method provided by another example embodiment of the present disclosure.
Fig. 4 illustrates a schematic flowchart of an image color correction method provided by a further example embodiment of the present disclosure.
Fig. 5 illustrates a schematic flowchart of an image color correction method provided by a yet further example embodiment of the present disclosure.
Fig. 6 illustrates a schematic flowchart of an image color correction method provided by a yet further example embodiment of the present disclosure.
Fig. 7 illustrates a schematic flowchart of an image color correction method provided by a yet further example embodiment of the present disclosure.
Fig. 8 illustrates a schematic flowchart of an image color correction method provided by a yet further example embodiment of the present disclosure.
Fig. 9 illustrates a schematic diagram of a structure of an image color correction apparatus provided by an example embodiment of the present disclosure.
Fig. 10 illustrates a schematic diagram of a structure of an image color correction apparatus provided by another example embodiment of the present disclosure.
Fig. 11 illustrates a schematic diagram of a structure of an image color correction apparatus provided by a further example embodiment of the present disclosure.
Fig. 12 illustrates a schematic diagram of a structure of an electronic device provided by an example embodiment of the present disclosure.

### DETAILED DESCRIPTION OF EMBODIMENTS

To make the present disclosure clear, reference below will be made to drawings to describe in detail example embodiments of the present disclosure. Apparently, the embodiments described herein are only a part of the embodiments of the present disclosure, not all of them. It is to be appreciated that the present disclosure is not limited to those example embodiments.

It is to be noted that unless indicated clearly otherwise, the relative arrangement, numerical expressions, and numerical values of components and steps described in those embodiments do not limit the scope of the present disclosure.

Typically, when a vehicle moves from a driving environment to another (e.g., a vehicle moves from a highway to a tunnel), the CCM needs to be adjusted to adapt to the driving environment change. However, according to the current common solution, the CCM is directly switched and adjusted. Such adjustment easily causes severe flickering, color distortion, abnormal saturation, or the like, in images captured by in-vehicle cameras, and thus results in a risk to the sensing and recognition capabilities of the intelligent driving system of the vehicle. In order to solve the above technical problem, the present disclosure provides a method, an apparatus, a device and a storage medium for correcting an image color, which can solve the problem of image color abnormalities caused by switching and adjusting the CCM for image correction when the driving environment is changed.

According to the image color correction method provided by the present disclosure, in the event that a driving environment of a vehicle is changed from a first driving environment to a second driving environment, an adjustment speed for adjusting a color correction matrix corresponding to a current time point can be determined based on the color correction matrix corresponding to a previous time point and a color correction matrix corresponding to a second driving environment, and the color correction matrix corresponding to the current time point can be determined based on the adjustment speed for adjusting the color correction matrix corresponding to the current time point, to perform color correction on the image frame captured at the current time point. By the implementations of the embodiments of the present disclosure, a color correction matrix respectively corresponding to a respective time point in the second driving environment can be respectively determined based on the adjustment speed for adjusting the color correction matrix respectively corresponding to the respective time point. As such, the CCMs can be smoothly transitioned and adjusted as the actual driving environment is changed. Further, in a smooth transition process of the present disclosure, the CCMs respectively corresponding to the respective time points can be determined. In this way, when the CCMs respectively corresponding to the respective time points are used to correct an image frame sequence (the image frame sequence includes images captured respectively at a plurality of time points) captured for the second driving environment, in the case of a change of the driving environment, abnormalities (e.g., image flickering, and the like) caused by direct adjustments from the first color correction matrix corresponding to the first driving environment to the second color correction matrix corresponding to the second driving environment can be reduced, thereby ensuring the driving.

### Overview of present disclosure

The image color correction method provided by embodiments of the present disclosure can be applied to an environment sensing scenario of a vehicle, and any other applicable scenarios.

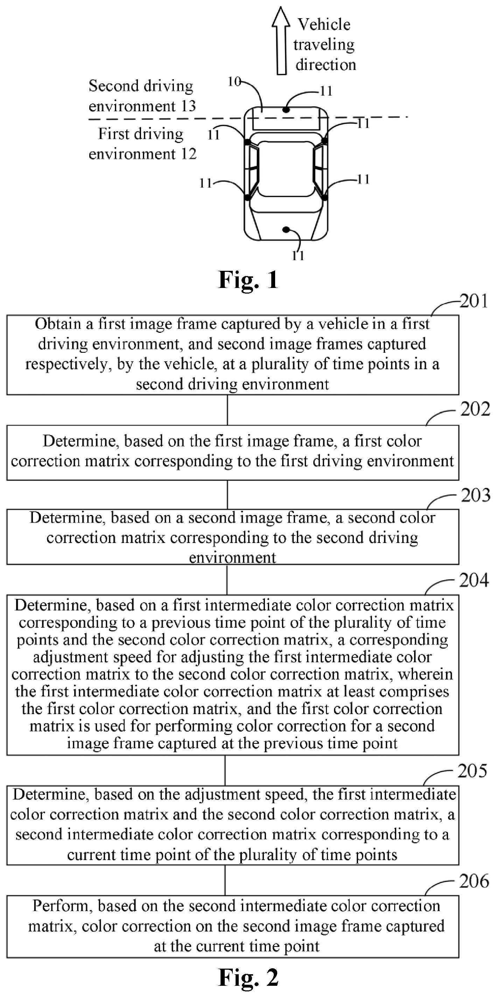

Fig. 1 illustrates a schematic diagram of an application scenario provided by an example embodiment of the present disclosure. As shown therein, a vehicle 10 is provided thereon with at least one camera 11, and the vehicle 10 travels from a first driving environment 12 to a second driving environment 13, where the first driving environment 12 and the second driving environment 13 have different environment color temperatures and environment luminances.

For example, the first driving environment 12 is an unobstructed driving environment on a highway in the daytime, and the second driving environment 13 is a driving environment inside a tunnel on the highway. When the vehicle 10 travels from the first driving environment 12 to the second driving environment 13, the camera 11 on the vehicle 10 captures images of the surrounding driving environment, and thus it can obtain a first image frame for the first driving environment 12 captured by the vehicle 10, and second image frames captured respectively, by the vehicle, at a plurality of time points in the second driving environment 13.

In some examples, the last image frame captured in the first driving environment 12 before the vehicle 10 enters the second driving environment 13 is used as the first image frame. Respective image frames in a plurality of image frames captured continuously after the vehicle 10 enters the second driving environment 13 are used as the second image frames. According to the image color correction method provided by the embodiments of the present disclosure, the first image frame and the second image frames captured respectively at the plurality of time points can be processed to obtain CCM color correction matrices respectively corresponding to the plurality of time points, and color correction can be performed on the second image frames captured respectively at the plurality of time points, using the CCM color correction matrices respectively corresponding to the plurality of time points.

Further, the second image frames having been subject to color correction can be used as input data for vehicle environment sensing, to provide input information for downstream environment sensing and processing. It is to be noted that Fig. 1 is provided only for illustration, and the vehicle 10 may be provided thereon with a camera 11, or may be provided thereon with multiple cameras 11. In the embodiments of the present disclosure, the number and the positions of the cameras 11 in Fig. 1 are not limited. During actual use, the camera 11 may be a front-view wide-angle camera of a vehicle, or may be a front-view narrow-angle camera of the vehicle, or may be a side-view/surround-view/panoramic-view camera, or the like, of the vehicle.

In the related technology, the CCM is directly switched and adjusted according to the driving environment change, to correct images captured in different driving environments. However, due to differences in parameters such as color temperature, luminance and the like, in different driving environments, the correction method may result in image flickering, color distortion, abnormal saturation, and the like, which results in a risk to intelligent driving recognition in the intelligent system and affects driving safety.

To solve the above problem, the embodiments of the present disclosure provide an image color correction method. With the method, in the event that a driving environment of a vehicle is changed from a first driving environment to a second driving environment, an adjustment speed for adjusting a color correction matrix corresponding to a current time point can be determined based on the color correction matrix corresponding to a previous time point and a color correction matrix corresponding to a second driving environment, and the color correction matrix corresponding to the current time point can be determined based on the adjustment speed for adjusting the color correction matrix corresponding to the current time point, to perform color correction on the image frame captured at the current time point. By the implementations of the embodiments of the present disclosure, a color correction matrix respectively corresponding to a respective time point in the second driving environment can be respectively determined based on the adjustment speed for adjusting the color correction matrix respectively corresponding to the respective time point. As such, the CCMs can be smoothly transitioned and adjusted as the actual driving environment is changed. Further, in a smooth transition process of the present disclosure, the CCMs respectively corresponding to the respective time points can be determined. In this way, when the CCMs respectively corresponding to the respective time points are used to correct an image frame sequence (the image frame sequence includes images captured respectively at a plurality of time points) captured for the second driving environment, in the case of a change of the driving environment, abnormalities (e.g., image flickering, and the like) caused by direct adjustments from the first color correction matrix corresponding to the first driving environment to the second color correction matrix corresponding to the second driving environment can be reduced, thereby ensuring the driving safety.

### Example Method

Fig. 2 illustrates a schematic flowchart of an image color correction method provided by an embodiment of the present disclosure. The embodiment can be applied to an electronic device (e.g., a vehicle infotainment system, a domain controller, an in-vehicle computing platform, a smartphone, a laptop, or the like, of a vehicle). As shown therein, the method comprises the following steps S201-S206.

Step S201: a first image frame captured by a vehicle in a first driving environment, and second image frames captured respectively, by the vehicle, at a plurality of time points in a second driving environment are obtained.

By way of example, the first driving environment and the second driving environment are different in environment parameters. In some examples, the first driving environment and the second driving environment have different environment color temperatures and/or environment luminances.

For example, as shown in Fig. 1, a vehicle traveling on a highway during the daytime is taken as an example. When the vehicle enters a tunnel, because the environment color temperatures and the environment luminances inside and outside the tunnel are significantly different, the driving environment before the vehicle enters the tunnel is the first driving environment 12, and the driving environment after the vehicle enters the tunnel is the second driving environment 13. Subsequently, the first image frame captured by the camera 11 on the vehicle 10 in the first driving environment 12, and second image frames captured respectively, by the camera 11 on the vehicle 10, at a plurality of time points in the second driving environment 13 can be obtained. If the time point before the vehicle enters the tunnel is the i^{th} time point and the vehicle enters the tunnel at the (i+1)^{th} time point, the image on the surrounding environment captured by the vehicle at the i^{th} time point is the first image frame; images on the surrounding environment captured by vehicle at the (i+1)^{th} time point and multiple time points behind the (i+1)^{th} time point are the second image frames.

For another example, a vehicle traveling in a tunnel is taken as an example. Due to the light change inside the tunnel, a first segment and a second segment in the tunnel have different environment color temperatures and environment luminances, and in this case, the first segment is used as the first driving environment, and the second segment is used as the second driving environment. That is, the first driving environment and the second driving environment in the embodiment of the present disclosure can be distinguished based on the environment temperature color and the environment luminance. Therefore, the first image frame captured when the vehicle travels on the first segment, and a plurality of second images captured at a plurality of time points when the vehicle travels on the second segment can be obtained.

Step S202: a first color correction matrix corresponding to the first driving environment is determined based on the first image frame.

For example, a scenario where a vehicle travels on a highway during the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. Then, the first image captured at the i^{th} time point can be processed, to determine a first color correction matrix corresponding to the first driving environment. Alternatively, the first image frame captured at the (i-1)^{th} or (i-2)^{th} time point before the vehicle enters the tunnel (i.e., the vehicle travels in the first driving environment) can be processed, to obtain a first color correction matrix.

By way of example, AWB (Auto White Balance) statistical data processing can be performed on the first image frame, to obtain an environment color temperature corresponding to the first driving environment. AE (Auto Exposure) statistical data processing can be performed on the first image frame, to obtain an environment luminance corresponding to the first driving environment. Then, the first color correction matrix corresponding to the first driving environment can be determined based on the environment color temperature corresponding to the first driving environment and the environment luminance corresponding to the first driving environment, and the first color correction matrix is used as the initial color correction matrix *CCM*_{current}.

Step S203: a second color correction matrix corresponding to the second driving environment is determined based on a second image frame.

For example, a scenario where a vehicle travels from a highway to a tunnel during the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. In this case, the second image frame captured at the (i+1)^{th} time point can be processed, to determine a second color correction matrix corresponding to the second driving environment.

By way of example, AWB (Auto White Balance) statistical data processing can be performed on the second image frame, to obtain an environment color temperature corresponding to the second driving environment. AE (Auto Exposure) statistical data processing can be performed on the second image frame, to obtain an environment luminance corresponding to the second driving environment. Then, the second color correction matrix corresponding to the second driving environment can be determined based on the environment color temperature corresponding to the second driving environment and the environment luminance corresponding to the second driving environment, and the second color correction matrix is used as the target color correction matrix *CCM_{target}.*

Step 204: a corresponding adjustment speed for adjusting the first intermediate color correction matrix to the second color correction matrix is determined based on a first intermediate color correction matrix corresponding to a previous time point of the plurality of time points and the second color correction matrix, wherein the first intermediate color correction matrix at least comprises the first color correction matrix, and the first color correction matrix is used for performing color correction for a second image frame captured at the previous time point.

By way of example, the plurality of time points in the second driving environment include a current time point, and a plurality of previous time points before the current time point. For example, a scenario where a vehicle enters a tunnel from a highway during the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points after the (i+1)^{th} time point. In the case, the current time point may be any of the (i+1)^{th} time point, (i+2)^{th} time point, (i+3)^{th} time point, (i+4)^{th} time point, and the like. If the current time point is the (i+4)^{th} time point, the previous time point before the current time point may be any of the (i+1)^{th} through the (i+4)^{th} time point. The embodiments of the present disclosure are not limited by this example. It is to be noted that a previous time point neighboring the current time is taken as an example for illustration in the following description of the embodiment of the present disclosure.

In some examples, the plurality of time points in the second driving environment correspond to different CCMs, respectively, and the different CCMs corresponding to the plurality of time points may be used as intermediate color correction matrices *CCM*ₜₑₘₚ. Further, color correction can be performed on the second image frames continuously captured, using the different *CCM*ₜₑₘₚ corresponding to the plurality of time points, until *CCM*ₜₑₘₚ corresponding to a certain time point is identical to the target color correction matrix *CCM_{target}*. After determining that *CCM*ₜₑₘₚ corresponding to a certain time point is identical to the target color correction matrix *CCM_{target}*, if the vehicle is kept traveling in the second driving environment, *CCM_{target}* can still be used to perform color correction on the image frames captured subsequently.

In some examples, to determine *CCM*ₜₑₘₚ corresponding to a respective time point of the plurality of time points, a CCM adjustment speed corresponding to the respective time point can be determined, where the adjustment speed corresponding to the current time point is used to indicate a number of frames required for adjusting *CCM*ₜₑₘₚ corresponding to the previous time point to the target color correction matrix *CCM_{target}*. Then, an adjustment speed for adjusting the first intermediate color correction matrix to the target color correction matrix *CCM_{target}* can be determined based on the first intermediate color correction matrix corresponding to the previous time point of the plurality of time points and the target color correction matrix *CCM_{target}*, where the first intermediate color correction matrix is used for performing color correction on the second image frame captured at the previous time point, which at least includes an initial color correction matrix *CCM*_{current}.

For example, a scenario where a vehicle enters a tunnel from a highway in the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. At the i^{th} time point, color correction is performed on the first image frame captured at the i^{th} time point, using the initial color correction matrix *CCM*_{current}. Only after processed by the ISP (Image Signal Processor), the second image frame captured at the (i+1)^{th} time point can be obtained and used to determine the environment color temperature and the environment luminance in the second driving environment. Thereafter, the target color correction matrix *CCM_{target}* can be determined based on the environment color temperature and the environment luminance in the second driving environment, and the initial color correction matrix *CCM*_{current} corresponding to the i^{th} time point is still used to perform color correction on the second image frame captured at the i^{th} time point. At the (i+2)^{th} time point, an adjustment speed *v*₁ for adjusting the initial color correction matrix *CCM*_{current} to the target color correction matrix *CCM*_{target} can be determined based on the initial color correction matrix *CCM*_{current} and the target color correction matrix *CCM_{target}*, and the intermediate color correction matrix *CCM*ₜₑₘₚ₁ corresponding to the (i+2)^{th} time point can be determined based on the adjustment speed *v*₁; at this time, the intermediate color correction matrix *CCM*ₜₑₘₚ₁ can be used for performing color correction on the second image frame captured at the (i+2)^{th} time point. At the (i+3)^{th} time point, an adjustment speed *v*₂ for adjusting the intermediate color correction matrix *CCM*ₜₑₘₚ₁ to the target color correction matrix *CCM_{target}* can be determined based on intermediate color correction matrix *CCM*ₜₑₘₚ₁ corresponding to the previous time point (i.e., the (i+2)^{th} time point) and the target color correction matrix *CCM_{target}*, and the intermediate color correction matrix *CCM*ₜₑₘₚ₂ corresponding to the (i+3)^{th} time point can be determined based on the adjustment speed *v*₂; at this time, the intermediate color correction matrix *CCM*ₜₑₘₚ₂ is used for performing color correction on the second image frame captured at the (i+3)^{th} time point. At the (i+4)^{th} time point, an adjustment speed *v*₃ for adjusting the intermediate color correction matrix *CCM*ₜₑₘₚ₂ to the target color correction matrix *CCM_{target}* can be determined based on the intermediate color correction matrix *CCM*ₜₑₘₚ₂ corresponding to the previous time point (i.e., the (i+3)^{th} time point) and the target color correction matrix *CCM_{target}*, and the intermediate color correction matrix *CCM*ₜₑₘₚ₃ corresponding to the (i+4)^{th} time point can be determined based on the adjustment speed *v*₃; at this time, the intermediate color correction matrix *CCM*ₜₑₘₚ₃ can be used for performing color correction on the second image frame captured at the (i+4)^{th} time point, so on and so forth, such that an adjustment speed corresponding to a respective time point of the plurality of time points can be determined.

Step 205: a second intermediate color correction matrix corresponding to a current time point of the plurality of time points is determined based on the adjustment speed, the first intermediate color correction matrix and the second color correction matrix.

By way of example, a second intermediate color correction matrix corresponding to the current time point can be determined based on the determined adjustment speed, the first intermediate color correction matrix corresponding to the previous time point before the current time point, and the target color correction matrix (i.e. the second color correction matrix). That is, in the event that the driving environment of the vehicle is changed from the first driving environment to the second driving environment, the intermediate color correction matrix corresponding to the current time point can be determined on the adjustment speed corresponding to the current time point. In this way, the CCM for performing color correction on the image frames captured in the second driving environment can be gradually transitioned and adjusted to the target color correction matrix *CCM_{target}*. Further, when correcting the image captured at a respective time point in the second driving environment using the respective intermediate correction matrix in the smooth transitioning process, abnormalities (e.g., image flickering, and the like) caused by direct adjustments to the CCM in the case of the driving environment change can be reduced, thus ensuring driving safety.

For example, a scenario where a vehicle enters a tunnel from a highway in the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. At the (i+2)^{th} time point, an intermediate color correction matrix*CCM*ₜₑₘₚ₁ corresponding to the (i+2)^{th} time point can be determined based on the adjustment speed *v*₁, the initial color correction matrix *CCM*_{current} (i.e., the first color correction matrix) and the target color correction matrix *CCM*_{target} (i.e., the second color correction matrix), and color correction can be performed on the second image frame captured at the (i+2)^{th} time point, using the intermediate color correction matrix *CCM*ₜₑₘₚ₁. At the (i+3)^{th} time point, an intermediate color correction matrix *CCM*ₜₑₘₚ₂ corresponding to the (i+3)^{th} time point can be determined based on the adjustment speed *v*₂, the intermediate color correction matrix *CCM*ₜₑₘₚ₁ and the target color correction matrix *CCM_{target}*, and color correction can be performed on the second image frame captured at the (i+3)^{th} time point, using the intermediate color correction matrix *CCM*ₜₑₘₚ₂. At the (i+4)^{th} time point, an intermediate color correction matrix *CCM*ₜₑₘₚ₃ can be determined based on the adjustment speed *v*₃, the intermediate color correction matrix *CCM*ₜₑₘₚ₂ and the target color correction matrix *CCM_{target}*, and color correction can be performed on the second image frame captured at the (i+4)^{th} time point, using the intermediate color correction matrix *CCM*ₜₑₘₚ₃. The rest can be implemented likewise, such that an intermediate color correction matrix *CCM*ₜₑₘₚ corresponding to a respective one of the plurality of time points can be determined, including *CCM*ₜₑₘₚ₁, *CCM*ₜₑₘₚ₂, *CCM*ₜₑₘₚ₃ and the like. When the intermediate color correction matrix *CCM*ₜₑₘₚ is identical to the target color correction matrix *CCM_{target}*, the CCM adjustment is completed, and *CCM_{target}* can be used for performing color correction on second image frames captured subsequently.

Step S206: color correction is performed, based on the second intermediate color correction matrix, on the second image frame captured at the current time point.

By way of example, referring to Fig. 1, images on the surrounding environment captured by the camera 11 are all input into the image signal processor for processing, a second intermediate color correction matrix corresponding to the current time point is determined, and the second intermediate color correction matrix is set in a CCM hardware module of the image signal processor, to thus enable color correction to be performed on the second image frame captured at the current time point based on the determined second intermediate color correction matrix.

According to the image color correction method provided by the present disclosure, in the event that a driving environment of a vehicle is changed from a first driving environment to a second driving environment, an adjustment speed for adjusting a color correction matrix corresponding to a current time point can be determined based on the color correction matrix corresponding to a previous time point and a color correction matrix corresponding to a second driving environment, and the color correction matrix corresponding to the current time point can be determined based on the adjustment speed for adjusting the color correction matrix corresponding to the current time point. By the implementations of the embodiments of the present disclosure, a color correction matrix respectively corresponding to a respective time point in the second driving environment can be respectively determined based on the adjustment speed for adjusting the color correction matrix respectively corresponding to the respective time point. As such, the CCMs can be smoothly transitioned and adjusted as the actual driving environment is changed. Further, in a smooth transition process of the present disclosure, the CCMs respectively corresponding to the respective time points can be determined. In this way, when the CCMs respectively corresponding to the respective time points are used to correct an image frame sequence (the image frame sequence includes images captured respectively at a plurality of time points) captured for the second driving environment, in the case of a change of the driving environment, abnormalities (e.g., image flickering, and the like) caused by direct adjustments from the first color correction matrix corresponding to the first driving environment to the second color correction matrix corresponding to the second driving environment can be reduced, thereby ensuring the driving safety.

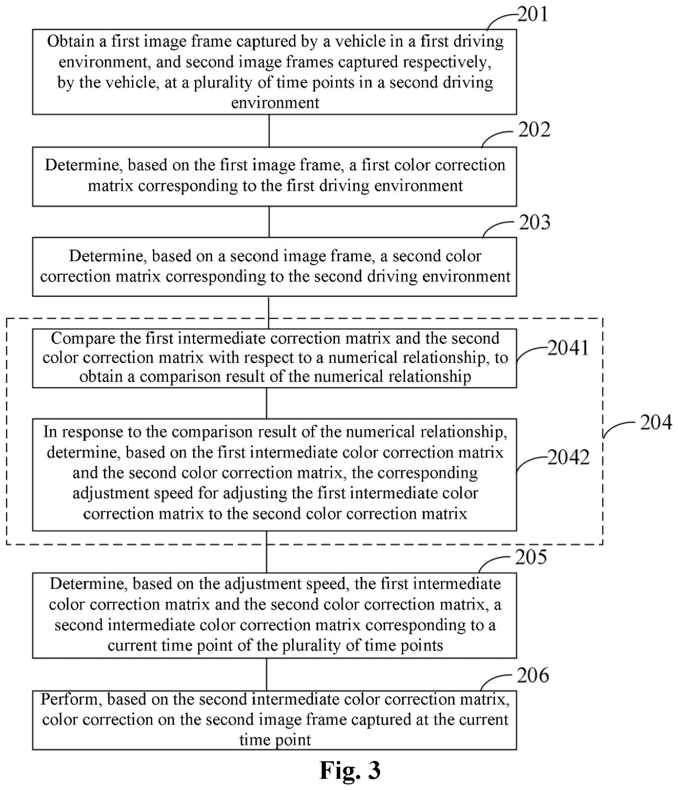

Referring to Fig. 3, on the basis of the embodiment shown in Fig. 2, the step S204 may comprise the following steps S2041-S2042.

Step S2041: the first intermediate correction matrix and the second color correction matrix are compared with respect to a numerical relationship, to obtain a comparison result of the numerical relationship.

By way of example, the CCM is typically a 3*3 matrix, including 9 matrix parameters. Further, the matrix parameters of the first intermediate color matrix are compared with the matrix parameters of the second intermediate color matrix, to obtain a comparison result of the matrix parameters. For example, the matrix parameters of the first intermediate color correction matrix corresponding to the previous time point are $\left[\begin{matrix}{a}_{11} & {a}_{12} & {a}_{13} \\ {a}_{21} & {a}_{22} & {a}_{23} \\ {a}_{31} & {a}_{32} & {a}_{33}\end{matrix}\right]$, and the matrix parameters of the second color correction matrix are $\left[\begin{matrix}{b}_{11} & {b}_{12} & {b}_{13} \\ {b}_{21} & {b}_{22} & {b}_{23} \\ {b}_{31} & {b}_{32} & {b}_{33}\end{matrix}\right]$. Further, *a*₁₁ and *b*₁₁ are compared, *a*₁₂ and *b*₁₂ are compared ..., and ultimately, *a*₃₃ and *b*₃₃ are compared.

Step S2042: in response to the comparison result of the numerical relationship, the corresponding adjustment speed for adjusting the first intermediate color correction matrix to the second color correction matrix is determined based on the first intermediate color correction matrix and the second color correction matrix, .

By way of example, the comparison result of the numerical relationship between the first intermediate color correction matrix and the second intermediate color correction matrix at least includes that the two matrices are identical, or the two matrices are different. Then, the corresponding adjustment speed for adjusting the first intermediate color correction matrix to the second color correction matrix can be determined based on the first intermediate color correction matrix and the second color correction matrix.

The image color correction method provided by the embodiment of the present disclosure comprises: comparing the first intermediate correction matrix and the second color correction matrix with respect to a numerical relationship, to obtain a comparison result of the numerical relationship; and in response to the comparison result of the numerical relationship, determining, based on the first intermediate color correction matrix and the second color correction matrix, the corresponding adjustment speed for adjusting the first intermediate color correction matrix to the second color correction matrix. In this way, the CCM adjustment speed corresponding to the current round (the current time point) can be determined based on the comparison result of the numerical relationship between the intermediate color correction matrix corresponding to the previous round (the previous time point) and the target color correction matrix, such that the color correction matrix used for the image corresponding to a respective time point in the second driving environment can gradually approach the target color correction matrix, to thus achieve smooth transition and adjustment of the CCM.

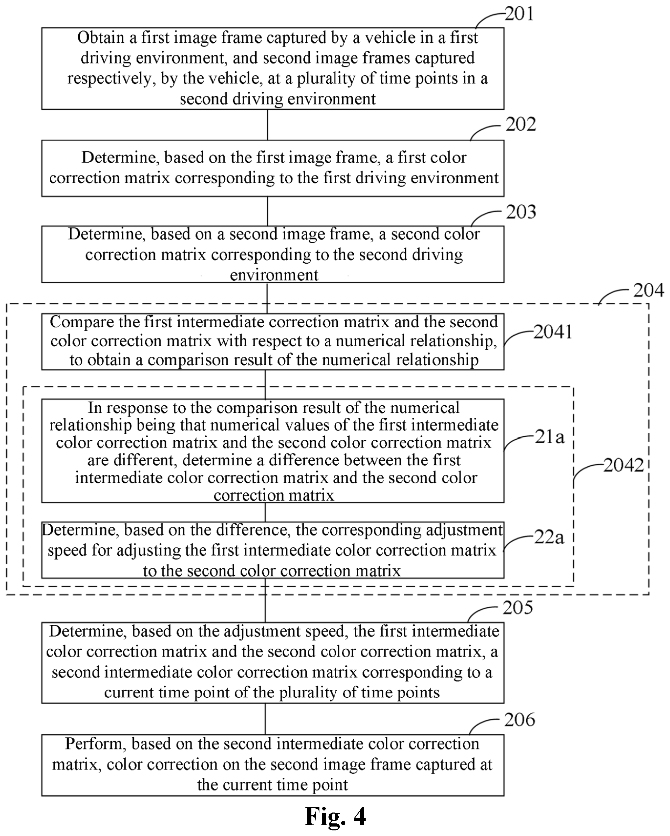

Referring to Fig. 4, on the basis of the embodiment shown in Fig. 3, the step S2042 may comprise the following steps S21a-S22a.

Step S21a: in response to the comparison result of the numerical relationship being that numerical values of the first intermediate color correction matrix and the second color correction matrix are different, a difference between the first intermediate color correction matrix and the second color correction matrix is determined.

By way of example, if the parameter values of the first intermediate color correction matrix corresponding to the previous time point and the second color correction matrix are different, it is indicated that the adjustment to the CCM in the second driving environment has not been completed, and at this time, it is required to further determine the adjustment speed corresponding to the current time point. Then, a difference between the first intermediate correction matrix and the second intermediate correction matrix is determined, and the adjustment speed corresponding to the current time point is determined based on the difference.

For instance, the matrix parameters of the first intermediate color correction matrix corresponding to the current time point are $\left[\begin{matrix}{a}_{11} & {a}_{12} & {a}_{13} \\ {a}_{21} & {a}_{22} & {a}_{23} \\ {a}_{31} & {a}_{32} & {a}_{33}\end{matrix}\right]$, and the matrix parameters of the second color correction matrix are $\left[\begin{matrix}{b}_{11} & {b}_{12} & {b}_{13} \\ {b}_{21} & {b}_{22} & {b}_{23} \\ {b}_{31} & {b}_{32} & {b}_{33}\end{matrix}\right]$. If *a*₁₁ and *b*₁₁ are different, it is considered that the numerical values of the first intermediate color correction matrix and the second color correction matrix are different, and at this time, it is required to further perform CCM transition and adjustment; subsequently, the adjustment speed corresponding to the current time point is determined based on the determined difference between the first intermediate color correction matrix and the second intermediate color correction matrix.

Step S22a: the corresponding adjustment speed for adjusting the first intermediate color correction matrix to the second color correction matrix is determined based on the difference.

By way of example, the corresponding adjustment speed for adjusting the first intermediate color correction matrix to the second color correction matrix can be determined based on the parameter difference between the first intermediate color correction matrix corresponding to the current time point and the second color correction matrix.

In some examples, if the matrix parameters of the first intermediate color correction matrix corresponding to the previous time point are $\left[\begin{matrix}{a}_{11} & {a}_{12} & {a}_{13} \\ {a}_{21} & {a}_{22} & {a}_{23} \\ {a}_{31} & {a}_{32} & {a}_{33}\end{matrix}\right]$, and the matrix parameters of the second color correction matrix are $\left[\begin{matrix}{b}_{11} & {b}_{12} & {b}_{13} \\ {b}_{21} & {b}_{22} & {b}_{23} \\ {b}_{31} & {b}_{32} & {b}_{33}\end{matrix}\right]$, the difference *Matrix_{diff}* between the first intermediate color correction matrix and the second color correction matrix can be determined through the following Equation (1): ${Matrix}_{diff} = \frac{\left|{a}_{11}-{b}_{11}\right| + \left|{a}_{12}-{b}_{12}\right| + … + \left|{a}_{33}-{b}_{33}\right|}{9}$ Equation (1)

Further, the adjustment speed corresponding to the difference can be determined through a preset speed mapping relationship table. For example, if the difference is equal to 100, the corresponding adjustment speed is 1/5; if the difference is equal to 65, the corresponding adjustment speed is 1/11; if the difference is equal to 20, the corresponding adjustment speed is 1/3. That is, a greater difference indicates a slower corresponding adjustment speed, while a smaller difference indicates a faster corresponding adjustment speed. In this way, the control speed can be controlled based on the CCM difference corresponding to a respective time point, to achieve smooth transition and adjustment to the CCM color correction matrix, and thus reduce abnormalities caused by image correction. It is to be noted that the preset speed mapping relationship table is determined based on empirical or experimental values, and the manner of determining the speed mapping relationship table is not limited in the embodiment of the present disclosure.

As described above, the adjustment speed corresponding to a respective time point is variable, which is increased after a time point (i.e., a frame) is passed. Because the difference between the intermediate color correction matrix *CCM*ₜₑₘₚ and the target color correction matrix *CCM_{target}* is being narrowed (i.e., the intermediate adjustment amount is becoming closer to the target value), so there is a low possibility that the corrected image frame contains an abnormality. After multiple time points are passed, the intermediate correction matrix *CCM*ₜₑₘₚ is identical to the target color correction matrix *CCM_{target}*, which indicates that the CCM has been adjusted to the target color correction matrix, and at this time, the adjustment is completed. If the vehicle subsequently continues to travel in the second driving environment, the target color correction matrix *CCM_{target}* can still be used to perform color correction on at least one second image frame captured later.

The image color correction method provided by the embodiment of the present disclosure comprises: in response to the comparison result of the numerical relationship being that numerical values of the first intermediate color correction matrix and the second color correction matrix are different, determining a difference between the first intermediate color correction matrix and the second color correction matrix; and determining, based on the difference, the corresponding adjustment speed for adjusting the first intermediate color correction matrix to the second color correction matrix. In this way, the adjustment speed corresponding to the current time point can be determined iteratively based on the difference between the intermediate color correction matrix corresponding to the current time point and the target color correction matrix, and then, the intermediate color correction matrix can be adjusted iteratively until the intermediate color correction matrix is adjusted to be identical to the target color correction matrix.

In some embodiments, the method further comprises: in response to the comparison result of the numerical relationship being that numerical values of the first intermediate color correction matrix and the second color correction matrix are identical, performing, based on the second color correction matrix, color correction on the second image frame captured at the current time point.

By way of example, if the numerical values of the first intermediate color correction matrix corresponding the previous time point and the second color correction matrix are identical, it is indicated that the intermediate color correction matrix *CCM*ₜₑₘₚ in the second driving environment has been adjusted to the target color correction matrix *CCM_{target}* in the second driving environment, and at this time, color correction can be directly performed on second image frames captured at the current time point and any subsequent time point, based on the target color correction matrix *CCM_{target}* (the second color correction matrix).

For example, if the matrix parameters of the first intermediate color correction matrix corresponding to the current time point are $\left[\begin{matrix}{a}_{11} & {a}_{12} & {a}_{13} \\ {a}_{21} & {a}_{22} & {a}_{23} \\ {a}_{31} & {a}_{32} & {a}_{33}\end{matrix}\right]$, and the matrix parameters of the second color correction matrix are $\left[\begin{matrix}{b}_{11} & {b}_{12} & {b}_{13} \\ {b}_{21} & {b}_{22} & {b}_{23} \\ {b}_{31} & {b}_{32} & {b}_{33}\end{matrix}\right]$. If *a*₁₁ and *b*₁₁ are identical, *a*₁₂ and *b*₁₂ are identical ..., and ultimately, *a*₃₃ and *b*₃₃ are identical, it is indicated that the numerical values of the first intermediate color correction matrix and the second color correction matrix are the same. At this time, the target color correction matrix *CCM_{target}* can be directly used to perform color correction on the second image frames captured at the current time point and any subsequent time point.

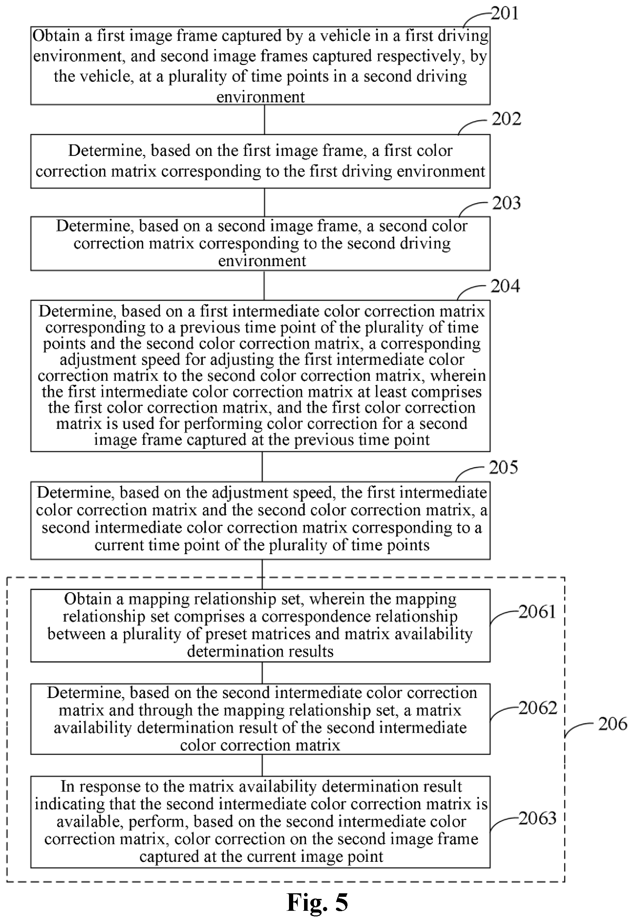

Referring to Fig. 5, on the basis of the embodiment as shown in Fig. 2, the step S206 may comprise the following steps S2061-S2063.

Step S2061: a mapping relationship set is obtained, wherein the mapping relationship set comprises a correspondence relationship between a plurality of preset matrices and matrix availability determination results.

By way of example, a mapping relationship set can be predetermined, where the mapping relationship set comprises a correspondence relationship between a plurality of preset matrices and matrix availability determination results. Wherein, the matrix availability determination result at least comprises: matrix available, or matrix unavailable.

In some examples, if the color correction matrix for performing color correction on image frames captured in the driving environment, as employed in the embodiment of the present disclosure, is a 3*3 CCM, a plurality of preset matrices in the mapping relationship set may be a plurality of CCMs formed by permuting and combining all possible values of respective parameters in the 3*3 color correction matrix.

Step S2062: a matrix availability determination result of the second intermediate color correction matrix is determined based on the second intermediate color correction matrix and through the mapping relationship set, .

By way of example, the second intermediate color correction matrix can be matched respectively with the plurality of preset matrices in the mapping relationship set, to obtain matching results, and a matrix availability determination result of the second intermediate color correction matrix is then determined from the mapping relationship set, based on the matching results. For instance, the second intermediate color correction matrix is identical to a preset matrix A among the plurality of preset matrices, and the matrix availability determination result of the preset matrix A in the mapping relationship set is available; in the case, the matrix availability determination result of the second intermediate color correction matrix is available.

Step S2063: in response to the matrix availability determination result indicating that the second intermediate color correction matrix is available, color correction is performed, based on the second intermediate color correction matrix, on the second image frame captured at the current image point.

By way of example, if the second intermediate color correction matrix is available, color correction can be performed on the second image frame capture at the current time point, based on the second intermediate color correction matrix. If the second intermediate color correction matrix is unavailable, it continues to determine a new intermediate color correction matrix based on the unavailable intermediate color correction matrix and the second color correction matrix, until a new available color correction matrix is determined.

For instance, a scenario where a vehicle enters a tunnel from a highway in the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. At the (i+2)^{th} time point, an intermediate color correction matrix*CCM*ₜₑₘₚ₁ corresponding to the (i+2)^{th} time point can be determined based on the adjustment speed *v*₁, the initial color correction matrix *CCM*_{current} (i.e., the first color correction matrix) and the target color correction matrix *CCM_{target}* (i.e., the second color correction matrix); if it is determined that matrix availability determination result corresponding to the intermediate color correction matrix *CCM*ₜₑₘₚ₁ is available, *CCM*ₜₑₘₚ₁ can be used to perform color correction on the second image frame captured at the (i+2)^{th} time point. At the (i+3)^{th} time point, an intermediate color correction matrix *CCM*ₜₑₘₚ₂₁ can be determined based on the adjustment speed , the intermediate color correction matrix *CCM*ₜₑₘₚ₁ and the target color correction matrix *CCM_{target}*; if it is determined that the matrix availability determination result corresponding to the intermediate color correction matrix *CCM*ₜₑₘₚ₂₁ is unavailable, an adjustment speed ${v}_{2}^{"}$ can be determined based on the intermediate color correction matrix *CCM*ₜₑₘₚ₂₁ and the target color correction matrix *CCM_{target}*, and an intermediate color correction matrix *CCM*ₜₑₘₚ₂₂ can then be determined based on the adjustment speed ${v}_{2}^{"}$, the intermediate color correction matrix *CCM*ₜₑₘₚ₂₁ and the target color correction matrix *CCM_{target}*; if it is determined that the matrix availability determination result corresponding to the intermediate color correction matrix *CCM*ₜₑₘₚ₂₂ is available, *CCM*ₜₑₘₚ₂₂ is used for performing color correction on the second image frame captured at the (i+3)^{th} time point. At the (i+4)^{th} time point, an adjustment speed ${v}_{3}^{"}$ can be determined based on the intermediate color correction matrix *CCM*ₜₑₘₚ₂₂ and the target color correction matrix *CCM_{target}*, and an intermediate color correction matrix ${CCM}_{temp 3}^{"}$ corresponding to the (i+4)^{th} time point can be determined based on the adjustment speed ${v}_{3}^{"}$, the intermediate color correction matrix *CCM*ₜₑₘₚ₂₂ and the target color correction matrix *CCM_{target}*; if it is determined that the matrix availability determination result corresponding to the intermediate color correction matrix ${CCM}_{temp 3}^{"}$ is available, ${CCM}_{temp 3}^{"}$is used for performing color correction on the second image frame captured at the (i+4)^{th} time point.

The image color correction method provided by the embodiment of the present disclosure comprises: obtaining a mapping relationship set, wherein the mapping relationship set comprises a correspondence relationship between a plurality of preset matrices and matrix availability determination results; determining, based on the second intermediate color correction matrix and through the mapping relationship set, a matrix availability determination result of the second intermediate color correction matrix; and in response to the matrix availability determination result indicating that the second intermediate color correction matrix is available, performing, based on the second intermediate color correction matrix, color correction on the second image frame captured at the current image point. In this way, availability of a respective intermediate color correction matrix can be determined using a preset mapping relationship set, to thus reduce image correction abnormalities.

In some embodiments, the mapping relationship set can be determined in the following manner: obtaining a number of preset correction parameters, respective value ranges of the preset correction parameters, and a test image set; determining a plurality of preset matrices through permutation and combination, based on the number of the preset correction parameters and the value ranges of the preset correction parameters; performing color correction on the test image set using a respective one of the preset matrices, to obtain a color correction result of the respective one of the preset matrices; determining, based on the color correction result of the respective one of the preset matrices, a matrix availability determination result corresponding to the respective one of the preset matrices; and determining the mapping relationship set, based on each of the preset matrices and the matrix availability determination result corresponding to the respective one of the preset matrices.

By way of example, if the size of the CCM used by the vehicle is 3*3, the CCM is $\left[\begin{matrix}{C}_{11} & {C}_{12} & {C}_{13} \\ {C}_{21} & {C}_{22} & {C}_{23} \\ {C}_{31} & {C}_{32} & {C}_{33}\end{matrix}\right]$; if the number of preset correction parameters is 9, the 9 preset correction parameters include: 3 correction parameters *C*₁₁, *C*₂₂ and *C*₃₃ for controlling a gain ratio of a respective color channel; and 6 correction parameters *C*₁₂, *C*₁₃, *C*₂₁, *C*₂₃, *C*₃₁ and *C*₃₃ for compensating for crosstalk between color channels. In addition, because the bit width of a respective preset correction parameter is 2 bytes (i.e., 16 bits), the value ranges of respective preset correction parameters are all [0, 65535], such that all the values of the 9 preset correction parameters can be permuted and combined, to obtain a plurality of preset CCMs (i.e., a plurality of preset matrices in the mapping relationship set). Then, the plurality of preset CCMs are respectively applied to the test image set, and the magnitude of color change in a respective image in the test image set after correction is observed. If the color of the corrected image is changed greatly, or becomes abnormal, it is considered that the preset CCM applied to correction is unavailable. Wherein, the effects of color correction performed on various test environment images using the preset CCM can be integrated, and if the colors of the various test environment images are all changed significantly, the applied preset CCM is marked as unavailable.

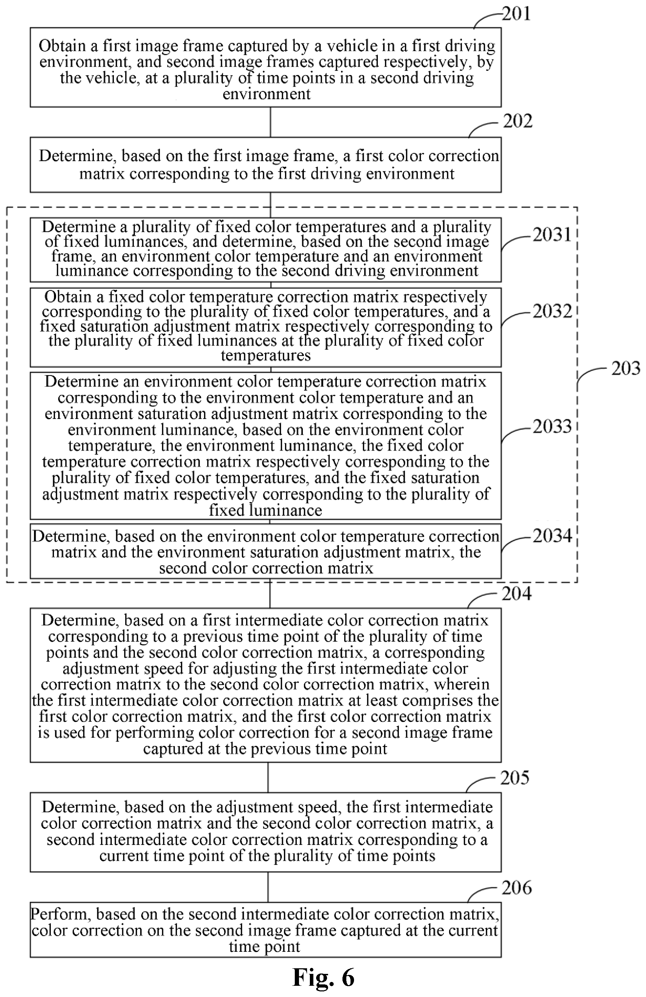

Referring to Fig. 6, on the basis of the embodiment shown in Fig. 2, the step S203 may comprise the following steps S2031-S2034.

Step S2031: a plurality of fixed color temperatures and a plurality of fixed luminances are determined, and an environment color temperature and an environment luminance corresponding to the second driving environment are determined based on the second image frame.

For example, a plurality of different fixed color temperatures can be determined, for example, color temperatures under H light, A light, D40 light, D50 light, D65 light, D75 light and the like. Moreover, a plurality of different fixed luminances can be determined, for example, 0.1 lux (the unit of illuminance), 1 lux, 100 lux, 1,000 lux, 5,000 lux, 10,000 lux and the like. It is to be noted that the number and the values of the fixed color temperatures and the fixed luminances are not limited in the embodiment of the present disclosure, which can be set by those skilled in the art depending on the actual usage scenario.

In some examples, an environment color temperature and an environment luminance corresponding to the second driving environment can be determined based on the second image frames captured by the vehicle in second driving environments. For example, AWB (Auto White Balance) can be performed on the second image frames, to obtain AWB statistical data. Further, the environment color temperature corresponding to the second driving environment can be determined based on the AWB statistical data. Likewise, AE (Auto Exposure) can be performed on the second image frames, to obtain AE statistical data. Then, the environment luminance corresponding to the second driving environment can be determined based on the AE statistical data. A scenario where a vehicle enters a tunnel from a highway in the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. In the case, AWB statistical data processing and AE statistical data processing can be performed on the second image frame captured at the (i+1)^{th} time point, to obtain the environment color temperature and the environment luminance in the second driving environment.

Step S2032: a fixed color temperature correction matrix respectively corresponding to the plurality of fixed color temperatures is obtained, and a fixed saturation adjustment matrix respectively corresponding to the plurality of fixed luminances at the plurality of fixed color temperatures is obtained.

By way of example, a respective fixed color temperature can be calibrated, to obtain a fixed color temperature correction matrix corresponding to the respective fixed color temperature. For example, in order to obtain the fixed color temperature correction matrix corresponding to the H-light color temperature, a light box can be provided, and a sensing device (e.g., a camera) can be placed therein. Moreover, by activating H light only in the light box, the color temperature of the H light can be calibrated to obtain a fixed color temperature correction matrix corresponding to the H light.

In some examples, a respective fixed luminance at a respective fixed color temperature can be calibrated, to obtain a fixed saturation adjustment matrix corresponding to the respective fixed luminance at the respective color temperature. For example, in order to obtain a fixed saturation adjustment matrix corresponding to 1,000 lux at the H-light color temperature, a light box can be provided, and a sensing device (e.g., a camera) can be placed therein. By activating H light only in the light box and setting the luminance to 1,000 lux, the luminance of 1,000 lux can be calibrated to obtain a fixed saturation adjustment matrix corresponding to the luminance of 1,000 lux at the H-light color temperature.

Step S2033: an environment color temperature correction matrix corresponding to the environment color temperature and an environment saturation adjustment matrix corresponding to the environment luminance are determined based on the environment color temperature, the environment luminance, the fixed color temperature correction matrices respectively corresponding to the plurality of fixed color temperatures, and the fixed saturation adjustment matrices respectively corresponding to the plurality of fixed luminance.

By way of example, typically, the environment color temperature and the environment luminance in the actual driving environment are not a fixed color temperature and a fixed luminance, making it impossible to directly obtain a corresponding environment color temperature correction matrix and a corresponding environment saturation adjustment matrix. Further, in the embodiments of the present disclosure, it is required to use the actual environment color temperature and environment luminance in the second driving environment, and fixed color temperature correction matrices respectively corresponding to the plurality of calibrated fixed color temperatures and the fixed saturation adjustment matrices respectively corresponding to the plurality of calibrated fixed luminances, to determine an environment color temperature correction matrix and an environment saturation adjustment matrix in the actual environment.

Step S2034: the second color correction matrix is determined based on the environment color temperature correction matrix and the environment saturation adjustment matrix.

By way of example, in the embodiments of the present disclosure, fitting the target color correction matrix *CCM_{target}* to be adjusted as actually required can be implemented based on the environment color temperature correction matrix and the environment saturation adjustment matrix in the actual environment. For example, the environment color temperature correction matrix is *CCM_{cct}*, and the environment saturation adjustment matrix is *SAT*ₗᵤₓ, and in the case, the second color correction matrix *CCM_{target}* can be determined through the following Equation (2): ${CCM}_{target} = {CCM}_{cct} ∗ {SAT}_{lux}$ Equation (2)

It is to be appreciated that reference can be made to the implementation of the steps S2031-S2034 for the specific implementation of determining, based on the first image, the first color correction matrix corresponding to the first driving environment, and details are omitted herein for brevity.

The method of correction an image color provided by the embodiments of the present disclosure comprises: determining a plurality of fixed color temperatures and a plurality of fixed luminances, and determining, based on the second image frame, an environment color temperature and an environment luminance corresponding to the second driving environment; obtaining a fixed color temperature correction matrix respectively corresponding to the plurality of fixed color temperatures, and a fixed saturation adjustment matrix respectively corresponding to the plurality of fixed luminances at the plurality of fixed color temperatures; determining an environment color temperature correction matrix corresponding to the environment color temperature and an environment saturation adjustment matrix corresponding to the environment luminance, based on the environment color temperature, the environment luminance, the fixed color temperature correction matrix respectively corresponding to the plurality of fixed color temperatures, and the fixed saturation adjustment matrix respectively corresponding to the plurality of fixed luminance; and determining, based on the environment color temperature correction matrix and the environment saturation adjustment matrix, the second color correction matrix. In this way, the calibrated fixed color temperature correction matrix and fixed saturation adjustment matrix can be used to determine the environment color temperature adjustment matrix and the environment saturation adjustment matrix in the actual environment, thereby reducing the difficulty of obtaining the color temperature correction matrix and the saturation adjustment matrix in the actual environment.

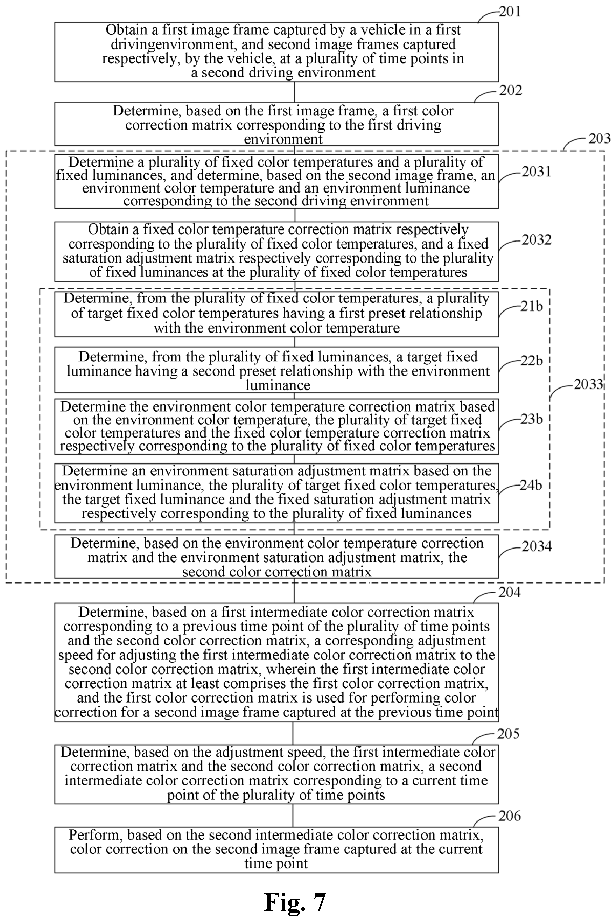

Referring to Fig. 7, on the basis of the embodiment shown in Fig. 6, the step S2033 may comprise the following steps S21b-S24b.

Step S21b: a plurality of target fixed color temperatures having a first preset relationship with the environment color temperature are determined from the plurality of fixed color temperatures.

By way of example, the first preset relationship may include an adjacency relationship. For example, the plurality of fixed color temperatures include color temperatures under H light, A light, D40 light, D50 light, D65 light and D75 light, and the environment color temperature is the color temperature under D60 light. In the case, a plurality of target fixed color temperatures corresponding to the environment color temperature under D60 light can be determined according to the adjacency relationship are: color temperatures under D50 light and D65 light adjacent thereto.

Step S22b: a target fixed luminance having a second preset relationship with the environment luminance is determined from the plurality of fixed luminances.

By way of example, the second preset relationship may include an adjacency-proximity relationship. For example, the plurality of fixed luminances include 0.1 lux, 1 lux, 100 lux, 1,000 lux, 5,000 lux and 10,000 lux, and the environment luminance is 4,000 lux. Then, the target fixed luminance corresponding to the environment luminance 4,000 lux can be determined as 5,000 lux according to the adjacency-proximity relationship, and the target fixed luminance corresponding to the environment luminance of 0.2 lux can be determined as 0.1 lux according to the adjacency-proximity relationship.

Step S23b: the environment color temperature correction matrix is determined based on the environment color temperature, the plurality of target fixed color temperatures and the fixed color temperature correction matrix respectively corresponding to the plurality of fixed color temperatures.

By way of example, the environment color temperature correction matrix can be determined in a differential manner, based on the environment color temperature, the plurality of target fixed color temperatures and the fixed color temperature correction matrix respectively corresponding to the plurality of fixed color temperatures.

In some examples, because the values of the fixed color temperatures are specific points (i.e., certain values), the value of the actual color temperature in the second driving environment may fall between the values of the two fixed color temperatures. Therefore, by leveraging the characteristic of a linear relationship between the fixed color temperature correction matrix corresponding to the fixed color temperature and the environment color temperature correction matrix corresponding to the actual color temperature, the environment color temperature correction matrix can be determined through linear conversion.

Step S24b: the environment saturation adjustment matrix is determined based on the environment luminance, the plurality of target fixed color temperature, the target fixed luminance and the fixed saturation adjustment matrix respectively corresponding to the plurality of fixed luminances.

By way of example, the environment saturation adjustment matrix can be determined in a differential manner based on the environment luminance, the plurality of target fixed color temperature, the target fixed luminance and the fixed saturation adjustment matrix respectively corresponding to the plurality of fixed luminances.

In some examples, because the values of the fixed luminances are specific points (i.e., certain values), the value of the actual luminance in the second driving environment may fall between the values of the two fixed luminances. Therefore, by leveraging the characteristic of a linear relationship between the fixed saturation adjustment matrix corresponding to the fixed luminance and the environment saturation adjustment matrix corresponding to the actual luminance, the environment saturation adjustment matrix can be determined through linear conversion.

The image color correction method of provided by the embodiment of the present disclosure comprise: determining, from the plurality of fixed color temperatures, a plurality of target fixed color temperatures having a first preset relationship with the environment color temperature; determining, from the plurality of fixed luminances, a target fixed luminance having a second preset relationship with the environment luminance; determining the environment color temperature correction matrix based on the environment color temperature, the plurality of target fixed color temperatures and the fixed color temperature correction matrix respectively corresponding to the plurality of fixed color temperatures; and determining an environment saturation adjustment matrix based on the environment luminance, the plurality of target fixed color temperatures, the target fixed luminance and the fixed saturation adjustment matrix respectively corresponding to the plurality of fixed luminances. In this way, the environment color correction matrix and the environment saturation adjustment matrix can be determined simply, quickly and accurately in the linear conversion manner.

In some embodiments, determining the environment color temperature correction matrix, based on the environment color temperature, the plurality of target fixed color temperatures and the fixed color temperature correction matrix respectively corresponding to the plurality of fixed color temperatures, comprises: determining a fixed color temperature correction matrix respectively corresponding to the plurality of target fixed color temperatures, based on the plurality of target fixed color temperatures and the fixed color temperature correction matrix respectively corresponding to the plurality of fixed color temperatures; and determining the environment color temperature correction matrix, based on the environment color temperature, the plurality of target fixed color temperatures and the fixed color temperature correction matrix respectively corresponding to the plurality of fixed color temperatures.

For instance, the environment color temperature is the color temperature under the D60 light, and the plurality of target fixed color temperatures are color temperatures under the D50 light and D65 light. Then, the fixed color temperature correction matrix *CCM*_{*cct*_*D*50} = [*a*₁, *a*₂, ..., *a*₉] corresponding to the D50 light, and the fixed color temperature correction matrix *CCM*_{*cct*_*D*65} = [*b*₁, *b*₂, ..., *b*₉] corresponding to the D65 light can be determined from the fixed color temperature correction matrices respectively corresponding to the plurality of fixed color temperatures. Therefore, the environment color temperature correction matrix *CCM*_{*cct*_*D*60} corresponding to the D60 light can be determined through linear conversion (i.e., *aⱼ* and corresponding *bⱼ* form a linear equation, where *j* = 1, 2 ...9), based on the D60 light, D50 light, D64 light, *CCM*_{*cct*_*D*50} and *CCM*_{*cct*_*D*655}.

In some embodiments, determining the environment saturation adjustment matrix, based on the environment luminance, the plurality of target fixed color temperatures, the target fixed luminance and the fixed saturation adjustment matrix respectively corresponding to the plurality of fixed luminances, comprises: determining a fixed saturation adjustment matrix respectively corresponding to the target fixed luminance at the plurality of target fixed color temperatures, based on the plurality of target fixed color temperatures, the target fixed luminance and the fixed saturation adjustment matrix respectively corresponding to the plurality of fixed luminances; and determining the environment saturation adjustment matrix based on the environment luminance and the fixed saturation adjustment matrix respectively corresponding to the target fixed luminance at the plurality of target fixed color temperatures.

For example, the environment luminance is 4,000 lux, the plurality of target fixed color temperatures are color temperatures under the D50 light and D65 light, and the target fixed luminance is 5,000 lux. Further, the fixed saturation adjustment matrix ${SAT}_{lux _ 5000}^{D 50}$ corresponding to the luminance of 5,000 lux under the D50 light, and the fixed saturation adjustment matrix ${SAT}_{lux _ 5000}^{D 65}$ corresponding to the luminance of 5,000 lux under the D65 light can be determined from the fixed saturation adjustment matrices respectively corresponding to the plurality of fixed luminances. Therefore, the environment saturation adjustment matrix can be determined based on the environment luminance of 4,000 lux, and the fixed saturation adjustment matrices ${SAT}_{lux _ 5000}^{D 50}$ and ${SAT}_{lux _ 5000}^{D 65}$ respectively corresponding to the target fixed luminance at the respective target fixed color temperatures.

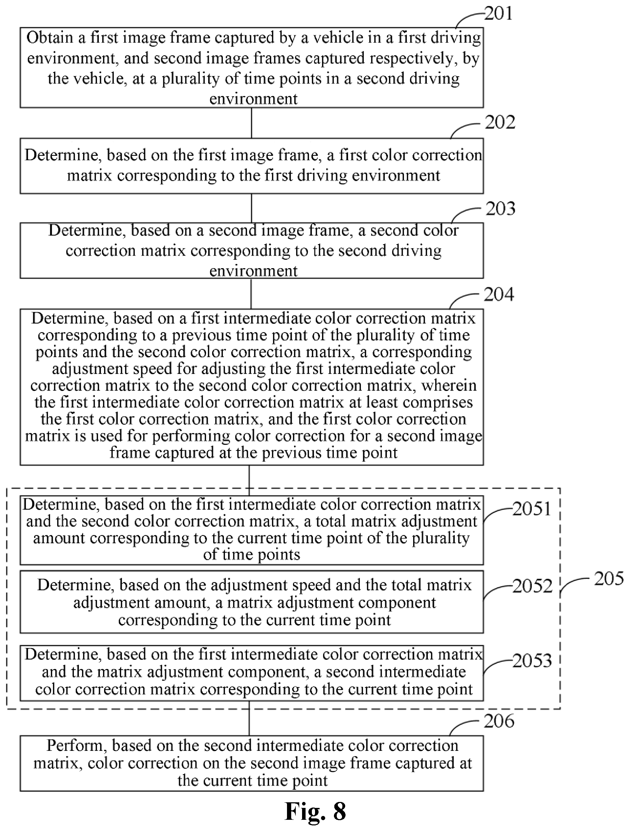

Referring to Fig. 8, on the basis of the embodiment shown in Fig. 2, the step S205 may comprise steps S2051-S2053.

Step S2051: a total matrix adjustment amount corresponding to the current time point of the plurality of time points is determined based on the first intermediate color correction matrix and the second color correction matrix, .

By way of example, in the embodiment of the present disclosure, the first intermediate color correction matrix *CCMₜₑₘₚ* corresponding to the previous time point and the target color correction matrix *CCM_{target}* can be used first to determine a total matrix adjustment amount corresponding to the current time point of the plurality of time points.

For instance, a scenario where a vehicle enters a tunnel from a highway in the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. At the (i+2)^{th} time point, the total matrix adjustment amount *Δ*₁ = |*CCM_{target} - CCM_{current}*| corresponding to the (i+2)^{th} time point can be determined based on the initial color correction matrix *CCM*_{current} (i.e., the first color correction matrix) and the target color correction matrix *CCM_{target}* (i.e., the second color correction matrix). At the (i+3)^{th} time point, the total matrix adjustment amount *Δ*₂ *=* |*CCM_{target} - CCM*_{*temp*1}| corresponding to the (i+3)^{th} time point can be determined based on the intermediate color correction matrix *CCM*ₜₑₘₚ₁ corresponding to the (i+2)^{th} time point and the target color correction matrix *CCM_{target}.* At the (i+4)^{th} time point, the total matrix adjustment amount *Δ*₂ = |*CCM_{target} - CCM*_{*temp*2}| corresponding to the (i+4)^{th} time point can be determined based on the intermediate color correction matrix *CCM*ₜₑₘₚ₂ corresponding to the (i+3)^{th} time point and the target color correction matrix *CCM_{target}.*

As described above, in the embodiment of the present disclosure, because the total matrix adjustment amount determined for a respective time point varies, the amount for adjusting the CCM at the respective time point is also different. On the basis, in conjunction with the adjustment speed corresponding to the respective time point, the CCM gradually approaches the target color correction matrix *CCM_{target}.*

Step S2052: a matrix adjustment component corresponding to the current time point is determined based on the adjustment speed and the total matrix adjustment amount.

By way of example, in the embodiment of the present disclosure, the matrix adjustment component corresponding to the current time point can be determined based on the adjustment speed and the total matrix adjustment amount corresponding to the current time point.

For instance, a scenario where a vehicle enters a tunnel from a highway in the daytime is taken as an example. The vehicle enters the tunnel from the highway at the (i+1)^{th} time point, i.e., the vehicle travels in the first driving environment (e.g., highway) at the i^{th} time point and a time point before the i^{th} time point, and travels in the second driving environment (e.g., tunnel) at the (i+1)^{th} time point and a plurality of time points following the (i+1)^{th} time point. At the (i+2)^{th} time point, a matrix adjustment component *v*₁ * *Δ*₁ corresponding to the (i+2)^{th} time point can be determined based on the adjustment speed *v*₁ and the total matrix adjustment amount *Δ*₁. At the (i+3)^{th} time point, a matrix adjustment component *v*₂ * *Δ*₂ corresponding to the (i+3)^{th} time point can be determined based on the adjustment speed *v*₂ and the total matrix adjustment amount *Δ*₂ corresponding to the (i+3)^{th} time point. At the (i+4)^{th} time point, a matrix adjustment component *v*₃ * *Δ*₃ corresponding to the (i+4)^{th} time point can be determined based on the adjustment speed *v*₃ and the total matrix adjustment amount *Δ*₃ corresponding to the (i+4)^{th} time point.

Step S2053: a second intermediate color correction matrix corresponding to the current time point is determined based on the first intermediate color correction matrix and the matrix adjustment component.

By way of example, the second intermediate color correction matrix corresponding to the current time point can be determined through the following Equation (3): ${CCM}_{temp} = {CCM}_{current} + v ∗ Δ$ Equation (3)

Wherein, CCMₜₑₘₚ is the second intermediate color correction matrix corresponding to the current time point, CCM_{current} is the first intermediate color correction matrix (i.e., the initial color correction matrix), and *v* * *Δ* is the matrix adjustment component corresponding to the current time point.

The image color correction method of provided by embodiments of the present disclosure implements: determining, based on the first intermediate color correction matrix and the second color correction matrix, a total matrix adjustment amount corresponding to the current time point of the plurality of time points; determining, based on the adjustment speed and the total matrix adjustment amount, a matrix adjustment component corresponding to the current time point; and determining, based on the first intermediate color correction matrix and the matrix adjustment component, a second intermediate color correction matrix corresponding to the current time point. In this way, based on the initial color correction matrix, an intermediate color correction matrix corresponding to a respective time point can be determined using a matrix adjustment component corresponding to the respective time point, thereby performing stepwise color correction on an image frame sequence captured in the second driving environment.

### Example Apparatus

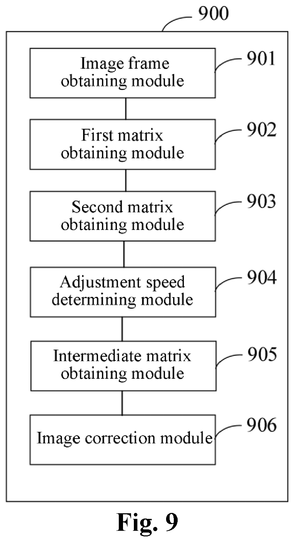

Fig. 9 illustrates an image color correction apparatus provided by an embodiment of the present disclosure. As shown therein, the correction apparatus 900 comprises an image frame obtaining module 901, a first matrix obtaining module 902, a second matrix obtaining module 903, an adjustment speed determining module 904, an intermediate matrix obtaining module 905 and an image correction module 906.

The image frame obtaining module 901 is used for obtaining module for obtaining a first image frame captured by a vehicle in a first driving environment, and second image frames captured respectively, by the vehicle, at a plurality of time points in a second driving environment;
the first matrix obtaining module 902 is used for determining, based on the first image frame, a first color correction matrix corresponding to the first driving environment;
the second matrix obtaining module 903 is used for determining, based on a second image frame, a second color correction matrix corresponding to the second driving environment;
the adjustment speed determining module 904 is for determining, based on a first intermediate color correction matrix corresponding to a previous time point of the plurality of time points and the second color correction matrix, a corresponding adjustment speed for adjusting the first intermediate color correction matrix to the second color correction matrix, wherein the first intermediate color correction matrix at least comprises the first color correction matrix, and the first color correction matrix is used for performing color correction for a second image frame captured at the previous time point; and
the intermediate matrix obtaining module 905 is used for determining, based on the adjustment speed, the first intermediate color correction matrix and the second color correction matrix, a second intermediate color correction matrix corresponding to a current time point of the plurality of time points; and
the image correction module 906 is used for performing, based on the second intermediate color correction matrix, color correction on the second image frame captured at the current time point.

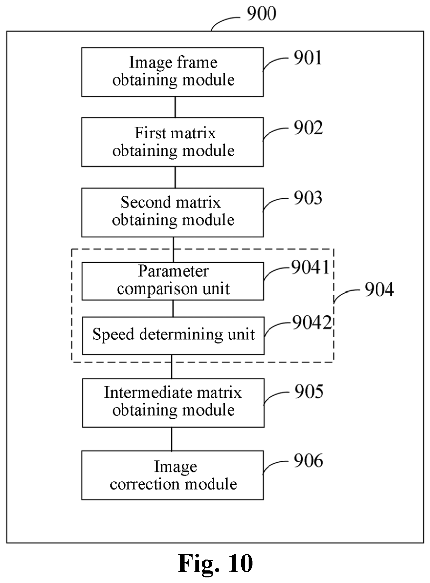

In some embodiments, as shown in Fig. 10, the adjustment speed determining module 904 comprises a parameter comparison unit 9041 and a speed determining unit 9042.

The parameter comparison unit 9041 is used for comparing the first intermediate correction matrix and the second color correction matrix with respect to a numerical relationship, to obtain a comparison result of the numerical relationship; and

The speed determining unit 9042 is used for, in response to the comparison result of the numerical relationship, determining, based on the first intermediate color correction matrix and the second color correction matrix, the corresponding adjustment speed for adjusting the first intermediate color correction matrix to the second color correction matrix.

In some embodiments, the speed determining unit 9042 is specifically used for: in response to the comparison result of the numerical relationship being that numerical values of the first intermediate color correction matrix and the second color correction matrix are different, determining a difference between the first intermediate color correction matrix and the second color correction matrix; and determining, based on the difference, the corresponding adjustment speed for adjusting the first intermediate color correction matrix to the second color correction matrix.

In some embodiments, the apparatus 900 further comprises:
a color correction module for, in response to the comparison result of the numerical relationship being that numerical values of the first intermediate color correction matrix and the second color correction matrix are identical, performing, based on the second color correction matrix, color correction on the second image frame captured at the current time point.

In some embodiments, the image correction module 906 is specifically used for: obtaining a mapping relationship set, wherein the mapping relationship set comprises a correspondence relationship between a plurality of preset matrices and matrix availability determination results; determining, based on the second intermediate color correction matrix and through the mapping relationship set, a matrix availability determination result of the second intermediate color correction matrix; and in response to the matrix availability determination result indicating that the second intermediate color correction matrix is available, performing, based on the second intermediate color correction matrix, color correction on the second image frame captured at the current image point.

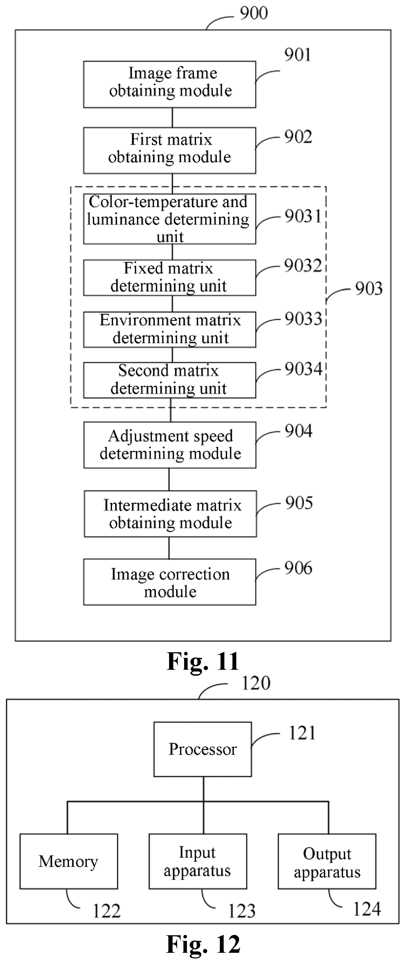

In some embodiments, as shown in Fig. 11, the second matrix obtaining module 903 comprises a color-temperature and luminance determining unit 9031, a fixed matrix determining unit 9032, an environment matrix determining unit 9033 and a second matrix determining unit 9034.

The color-temperature and luminance determining unit 9031 is used for determining a plurality of fixed color temperatures and a plurality of fixed luminances, and determining, based on the second image frame, an environment color temperature and an environment luminance corresponding to the second driving environment;

the fixed matrix determining unit 9032 is used for obtaining a fixed color temperature correction matrix respectively corresponding to the plurality of fixed color temperatures, and a fixed saturation adjustment matrix respectively corresponding to the plurality of fixed luminances at the plurality of fixed color temperatures;
the environment matrix determining unit 9033 is used for determining an environment color temperature correction matrix corresponding to the environment color temperature and an environment saturation adjustment matrix corresponding to the environment luminance, based on the environment color temperature, the environment luminance, the fixed color temperature correction matrix respectively corresponding to the plurality of fixed color temperatures, and the fixed saturation adjustment matrix respectively corresponding to the plurality of fixed luminance; and
the second matrix determining unit 9034 is used for determining, based on the environment color temperature correction matrix and the environment saturation adjustment matrix, the second color correction matrix.

In some embodiments, the environment matrix determining unit 9033 is used for: determining, from the plurality of fixed color temperatures, a plurality of target fixed color temperatures having a first preset relationship with the environment color temperature; determining, from the plurality of fixed luminances, a target fixed luminance having a second preset relationship with the environment luminance; determining the environment color temperature correction matrix based on the environment color temperature, the plurality of target fixed color temperatures and the fixed color temperature correction matrix respectively corresponding to the plurality of fixed color temperatures; and determining an environment saturation adjustment matrix based on the environment luminance, the plurality of target fixed color temperatures, the target fixed luminance and the fixed saturation adjustment matrix respectively corresponding to the plurality of fixed luminances.

In some embodiments, the environment matrix determining 9033 is specifically used for: determining, from the plurality of fixed color temperatures, a plurality of target fixed color temperatures having a first preset relationship with the environment color temperature; determining, from the plurality of fixed luminances, a target fixed luminance having a second preset relationship with the environment luminance; determining a fixed color temperature correction matrix respectively corresponding to the plurality of target fixed color temperatures, based on the plurality of target fixed color temperatures and the fixed color temperature correction matrix respectively corresponding to the plurality of fixed color temperatures; determining the environment color temperature correction matrix, based on the environment color temperature, the plurality of target fixed color temperatures and the fixed color temperature correction matrix respectively corresponding to the plurality of fixed color temperatures; and determining an environment saturation adjustment matrix based on the environment luminance, the plurality of target fixed color temperatures, the target fixed luminance and the fixed saturation adjustment matrix respectively corresponding to the plurality of fixed luminances.

In some embodiments, the environment matrix determining unit 9033 is specifically used for: determining, from the plurality of fixed color temperatures, a plurality of target fixed color temperatures having a first preset relationship with the environment color temperature; determining, from the plurality of fixed luminances, a target fixed luminance having a second preset relationship with the environment luminance; determining a fixed color temperature correction matrix respectively corresponding to the plurality of target fixed color temperatures, based on the plurality of target fixed color temperatures and the fixed color temperature correction matrix respectively corresponding to the plurality of fixed color temperatures; determining the environment color temperature correction matrix, based on the environment color temperature, the plurality of target fixed color temperatures and the fixed color temperature correction matrix respectively corresponding to the plurality of fixed color temperatures; determining a fixed saturation adjustment matrix respectively corresponding to the target fixed luminance at the plurality of target fixed color temperatures, based on the plurality of target fixed color temperatures, the target fixed luminance and the fixed saturation adjustment matrix respectively corresponding to the plurality of fixed luminances; and determining the environment saturation adjustment matrix based on the environment luminance and the fixed saturation adjustment matrix respectively corresponding to the target fixed luminance at the plurality of target fixed color temperatures.

In some embodiments, the intermediate matrix obtaining module 905 is specifically used for: determining, based on the first intermediate color correction matrix and the second color correction matrix, a total matrix adjustment amount corresponding to the current time point of the plurality of time points; determining, based on the adjustment speed and the total matrix adjustment amount, a matrix adjustment component corresponding to the current time point; and determining, based on the first intermediate color correction matrix and the matrix adjustment component, a second intermediate color correction matrix corresponding to the current time point.

Reference could be made to the advantageous technical effects corresponding to the example method described above, for the advantageous technical effects corresponding to the example embodiment of the image color correction apparatus 900, and details thereof are omitted herein for brevity.

### Example Electronic Device

Fig. 12 illustrates a diagram of a structure of an electronic device 120 provided by embodiments of the present disclosure, which comprises at least one processor 121 and a memory 122.

The processor 121 may be a Central Processing Unit (CPU) or other form of processing unit with a data processing capability and/or an instruction execution capability, and can control other components in the electronic device 120 to perform a desired function.

The memory 122 may comprise one or more computer program products that may comprise various forms of computer readable storage media, for example, a volatile memory and/or a non-volatile memory. The volatile memory may include, for example, a Random Access Memory (RAM) and/or a cache, and the like. The non-volatile memory may include, for example, a Read-Only Memory (ROM), a hard disk, a flash memory, and the like. The computer readable storage medium may have one or more computer program instructions stored thereon, and the processor 121 can run the one or more computer program instructions to implement the method of identifying a target object in an image and/or other desired functions described above in the various embodiments of the present disclosure.

In an example, the electronic device 120 may comprise: input apparatus 123 and output apparatus 124, where the components are interconnected via a bus system and/or a connection mechanism in other form (not shown).

The input apparatus 123 may further comprise, for example, a keyboard, a mouse, and the like.

The output apparatus 124 may output various types of information to the outside, which may include, for example, a display, a speaker, a printer, a communication network and remote output apparatus connected therewith, and the like.

For simplification, Fig. 12 only shows some components related to the present disclosure in the electronic device 120, and omits therefrom components such as a bus, an input/output interface, and the like. In addition, according to the specific application, the electronic device 120 may further include any other appropriate components.

### Example computer program product and computer-readable storage medium

In addition to the methods and apparatus described above, the embodiments of the present disclosure further provide a computer program product comprising computer program instructions, where the computer program instructions, when run by the processor, cause the processor to execute steps of the image color correction method according to the various embodiments of the present disclosure described above in the "Example Method" section.

Computer program code for performing operations of the present disclosure may be written by using one or more program design language or any combination. The program design language includes, but is not limited to, object oriented program design language such as Java, C++, and the like, and further includes conventional process-type program design language such as "C" or similar program design language. The program code may be completely or partially executed on a user computer, performed as an independent software packet, partially executed on the user computer and partially executed on a remote computer, or completely executed on the remote computer or a server.

Moreover, the embodiments of the present disclosure may further relate to a computer-readable storage medium having computer program instructions stored thereon, where the computer program instructions, when run by the processor, cause the processor to execute steps of the image color correction method according to the various embodiments of the present disclosure described above in the "Example Method" section.

The computer readable storage medium may be a readable medium or any combination of a plurality of readable media. The readable medium may be a readable signal medium or a readable storage medium. A readable medium may include, but is not limited to, an electronic, magnetic, optical, electromagnetic, infrared, or semiconductor system, apparatus, or device, or any suitable combination of the foregoing. More specific examples of a computer-readable storage medium may include an electrical connection based on one or more wires, a portable computer diskette, a hard disk, a Random Access Memory (RAM), a Read-Only Memory (ROM), an Erasable Programmable Read-Only Memory (EPROM or flash memory), an optical fiber, a Compact Disc Read-Only memory (CD-ROM), an optical storage device, a magnetic storage device, or any suitable combination of the foregoing.

Although the basic principles of the present disclosure have been described above with reference to the specific embodiments, the advantages, benefits, effects and the like are merely mentioned herein as examples, without limitations, which should not be construed as essentials of each embodiment of the present disclosure. In addition, the details disclosed above are provided only for illustration and ease of understanding, rather than limitation, which do not require that the present disclosure be implemented with those details.

If the modifications and variations thereto fall within the scope defined by the claims of the present disclosure and the equivalents thereof, the present disclosure is also intended to cover those modifications and variations.

## Claims

1. An image color correction method, comprising:
obtaining (201) a first image frame captured by a vehicle (10) in a first driving environment (12), and second image frames captured respectively, by the vehicle, at a plurality of time points in a second driving environment (13);
determining (202), based on the first image frame, a first color correction matrix corresponding to the first driving environment;
determining (203), based on a second image frame, a second color correction matrix corresponding to the second driving environment;
determining (204), based on a first intermediate color correction matrix corresponding to a previous time point of the plurality of time points and the second color correction matrix, a corresponding adjustment speed for adjusting the first intermediate color correction matrix to the second color correction matrix, wherein the first intermediate color correction matrix at least comprises the first color correction matrix, and the first color correction matrix is used for performing color correction for a second image frame captured at the previous time point;
determining (205), based on the adjustment speed, the first intermediate color correction matrix and the second color correction matrix, a second intermediate color correction matrix corresponding to a current time point of the plurality of time points; and
performing (206), based on the second intermediate color correction matrix, color correction on the second image frame captured at the current time point.

2. The method of claim 1, wherein determining, based on the first intermediate color correction matrix corresponding to the previous time point of the plurality of time points and the second color correction matrix, the corresponding adjustment speed for adjusting the first intermediate color correction matrix to the second color correction matrix, comprises:
comparing (2041) the first intermediate correction matrix and the second color correction matrix with respect to a numerical relationship, to obtain a comparison result of the numerical relationship; and
in response to the comparison result of the numerical relationship, determining (2042), based on the first intermediate color correction matrix and the second color correction matrix, the corresponding adjustment speed for adjusting the first intermediate color correction matrix to the second color correction matrix.

3. The method of claim 2, wherein, in response to the comparison result of the numerical relationship, determining, based on the first intermediate color correction matrix and the second color correction matrix, the corresponding adjustment speed for adjusting the first intermediate color correction matrix to the second color correction matrix, comprises:
in response to the comparison result of the numerical relationship being that numerical values of the first intermediate color correction matrix and the second color correction matrix are different, determining (21a) a difference between the first intermediate color correction matrix and the second color correction matrix; and
determining (22a), based on the difference, the corresponding adjustment speed for adjusting the first intermediate color correction matrix to the second color correction matrix.

4. The method of claim 2, further comprising:
in response to the comparison result of the numerical relationship being that numerical values of the first intermediate color correction matrix and the second color correction matrix are identical, performing, based on the second color correction matrix, color correction on the second image frame captured at the current time point.

5. The method of claim 1, wherein performing, based on the second intermediate color correction matrix, color correction on the second image frame captured at the current time point, comprises:
obtaining (2061) a mapping relationship set, wherein the mapping relationship set comprises a correspondence relationship between a plurality of preset matrices and matrix availability determination results;
determining (2062), based on the second intermediate color correction matrix and through the mapping relationship set, a matrix availability determination result of the second intermediate color correction matrix; and
in response to the matrix availability determination result indicating that the second intermediate color correction matrix is available, performing (2063), based on the second intermediate color correction matrix, color correction on the second image frame captured at the current image point.

6. The method of claim 1, wherein determining, based on the second image frame, the second color correction matrix corresponding to the second driving environment, comprises:
determining (2031) a plurality of fixed color temperatures and a plurality of fixed luminances;
determining, based on the second image frame, an environment color temperature and an environment luminance corresponding to the second driving environment;
obtaining (2032) a fixed color temperature correction matrix respectively corresponding to the plurality of fixed color temperatures, and a fixed saturation adjustment matrix respectively corresponding to the plurality of fixed luminances at the plurality of fixed color temperatures;
determining (2033) an environment color temperature correction matrix corresponding to the environment color temperature and an environment saturation adjustment matrix corresponding to the environment luminance, based on the environment color temperature, the environment luminance, the fixed color temperature correction matrix respectively corresponding to the plurality of fixed color temperatures, and the fixed saturation adjustment matrix respectively corresponding to the plurality of fixed luminance; and
determining (2034), based on the environment color temperature correction matrix and the environment saturation adjustment matrix, the second color correction matrix.

7. The method of claim 6, wherein determining the environment color temperature correction matrix corresponding to the environment color temperature and the environment saturation adjustment matrix corresponding to the environment luminance, based on the environment color temperature, the environment luminance, the fixed color temperature correction matrix respectively corresponding to the plurality of fixed color temperatures, and the fixed saturation adjustment matrix respectively corresponding to the plurality of fixed luminance, comprises:
determining (21b), from the plurality of fixed color temperatures, a plurality of target fixed color temperatures having a first preset relationship with the environment color temperature;
determining (22b), from the plurality of fixed luminances, a target fixed luminance having a second preset relationship with the environment luminance;
determining (23b) the environment color temperature correction matrix based on the environment color temperature, the plurality of target fixed color temperatures and the fixed color temperature correction matrix respectively corresponding to the plurality of fixed color temperatures; and
determining (24b) an environment saturation adjustment matrix based on the environment luminance, the plurality of target fixed color temperatures, the target fixed luminance and the fixed saturation adjustment matrix respectively corresponding to the plurality of fixed luminances.

8. The method of claim 7, wherein determining the environment color temperature correction matrix, based on the environment color temperature, the plurality of target fixed color temperatures and the fixed color temperature correction matrix respectively corresponding to the plurality of fixed color temperatures, comprises:
determining a fixed color temperature correction matrix respectively corresponding to the plurality of target fixed color temperatures, based on the plurality of target fixed color temperatures and the fixed color temperature correction matrix respectively corresponding to the plurality of fixed color temperatures; and
determining the environment color temperature correction matrix, based on the environment color temperature, the plurality of target fixed color temperatures and the fixed color temperature correction matrix respectively corresponding to the plurality of fixed color temperatures.

9. The method of claim 7, wherein determining the environment saturation adjustment matrix, based on the environment luminance, the plurality of target fixed color temperatures, the target fixed luminance and the fixed saturation adjustment matrix respectively corresponding to the plurality of fixed luminances, comprises:
determining a fixed saturation adjustment matrix respectively corresponding to the target fixed luminance at the plurality of target fixed color temperatures, based on the plurality of target fixed color temperatures, the target fixed luminance and the fixed saturation adjustment matrix respectively corresponding to the plurality of fixed luminances; and
determining the environment saturation adjustment matrix based on the environment luminance and the fixed saturation adjustment matrix respectively corresponding to the target fixed luminance at the plurality of target fixed color temperatures.

10. The method of any of claims 1-9, wherein determining, based on the adjustment speed, the first intermediate color correction matrix and the second color correction matrix, the second intermediate color correction matrix respectively corresponding to the current time point of the plurality of time points, comprises:
determining (2051), based on the first intermediate color correction matrix and the second color correction matrix, a total matrix adjustment amount corresponding to the current time point of the plurality of time points;
determining (2052), based on the adjustment speed and the total matrix adjustment amount, a matrix adjustment component corresponding to the current time point; and
determining (2053), based on the first intermediate color correction matrix and the matrix adjustment component, a second intermediate color correction matrix corresponding to the current time point.

11. An image color correction apparatus (900), comprising:
an image frame obtaining module (901) configured to obtain a first image frame captured by a vehicle in a first driving environment, and second image frames captured respectively, by the vehicle, at a plurality of time points in a second driving environment;
a first matrix obtaining module (902) configured to determine, based on the first image frame, a first color correction matrix corresponding to the first driving environment;
a second matrix obtaining module (903) configured to determine, based on a second image frame, a second color correction matrix corresponding to the second driving environment;
an adjustment speed determining module (904) configured to determine, based on a first intermediate color correction matrix corresponding to a previous time point of the plurality of time points and the second color correction matrix, a corresponding adjustment speed for adjusting the first intermediate color correction matrix to the second color correction matrix, wherein the first intermediate color correction matrix at least comprises the first color correction matrix, and the first color correction matrix is used for performing color correction for a second image frame captured at the previous time point;
an intermediate matrix obtaining module (905) configured to determine, based on the adjustment speed, the first intermediate color correction matrix and the second color correction matrix, a second intermediate color correction matrix corresponding to a current time point of the plurality of time points; and
an image correction module (906) configured to perform, based on the second intermediate color correction matrix, color correction on the second image frame captured at the current time point.

12. The apparatus (900) of claim 11, wherein the adjustment speed determining module (904) comprises:
a parameter comparison unit (9041) configured to compare the first intermediate correction matrix and the second color correction matrix with respect to a numerical relationship, to obtain a comparison result of the numerical relationship; and
a speed determining unit (9042) configured to determine, in response to the comparison result of the numerical relationship and based on the first intermediate color correction matrix and the second color correction matrix, the corresponding adjustment speed for adjusting the first intermediate color correction matrix to the second color correction matrix.

13. A computer-readable storage medium, wherein the storage medium stores a computer program, and the computer program is executed by a processor to perform the image color correction method of any of claims 1-10.

14. An electronic device (120), comprising:
a processor (121); and
a memory (122) for storing executable instructions by the processor;
wherein the processor is used for reading the executable instructions from the memory, and executing the instructions to implement the image color correction method of any of claims 1-10.

15. A computer program product, wherein instructions in the computer program product, when executed by a processor, perform the image color correction method of any of claims 1-10.
